# EUROPEAN PATENT APPLICATION

(11) **EP 1 154 584 A1**
(43) Date of publication of application: **14.11.2001**
(21) Application number: 00110026.2
(22) Date of filing: 12.05.2000
(51) Int. Cl.: H04B 1/707

(54) **Mobile station and method for allocating rake fingers and tracking devices**

(71) Applicant: SIEMENS AKTIENGESELLSCHAFT, 80333 München (DE)
(72) Inventor: Vejlgaard, Benny, 9260 Gistrup (DK)

(57) **Abstract**

A mobile station and method for allocating rake fingers [12] in optimal combinations for reception of Code Division Multiple Access (CDMA) mobile systems. The present invention provides a mobile station and method for rake finger [12] allocation for a rake receiver, each received code phase or impulse response being allocated at least one rake finger [12] and at least one tracking mechanism [11a, 11b]. The tracking mechanism [11a, 11b] has an early tracking finger [11a] and a late tracking finger [11b], the tracking fingers serving as both tracking fingers and rake fingers.

## Description

### Background

The present invention relates to mobile communication systems in general, and, more specifically, to a mobile station and method for allocating rake fingers for mobile communication systems, in particular in Code Division Multiple Access (CDMA) mobile systems, with high chip rates.

A mobile station, or terminal, in particular a Code Division Multiple Access system, may be allocated to a base station. When the CDMA mobile station is allocated to the base station, the CDMA mobile station will look to receive groups of multi-path components. See Viterbi, Andrew, Principles of Spread Spectrum Communications, Addison-Wesley Publishing Company.

A known receiver architecture for CDMA mobile systems is the rake receiver. See Price, R. et al., "A Communication Technique for Multipath Channels," Proceedings of the IRE, 1958, vol. 46, pp. 555-570. A rake receiver consists of a bank of correlation-type receivers or correlators. Each correlator of the bank of correlators is used to detect a separate multi-path component, the correlator detecting the stronger multi-path components. Once demodulation or detection occurs, the multi-path component can be termed a multi-path demodulator or multi-path components demodulated. In the rake receiver, each multi-path demodulator is termed a finger or a rake finger. In the rake receiver, each of the decorrelated multi-paths is combined into one signal before detection. The maximal ratio combining technique is optimum combining.

A mobile station, or terminal, of a mobile communications network must optimally combine signals into one output signal before detection while accounting for the signals' relative delays, amplitudes and phases.

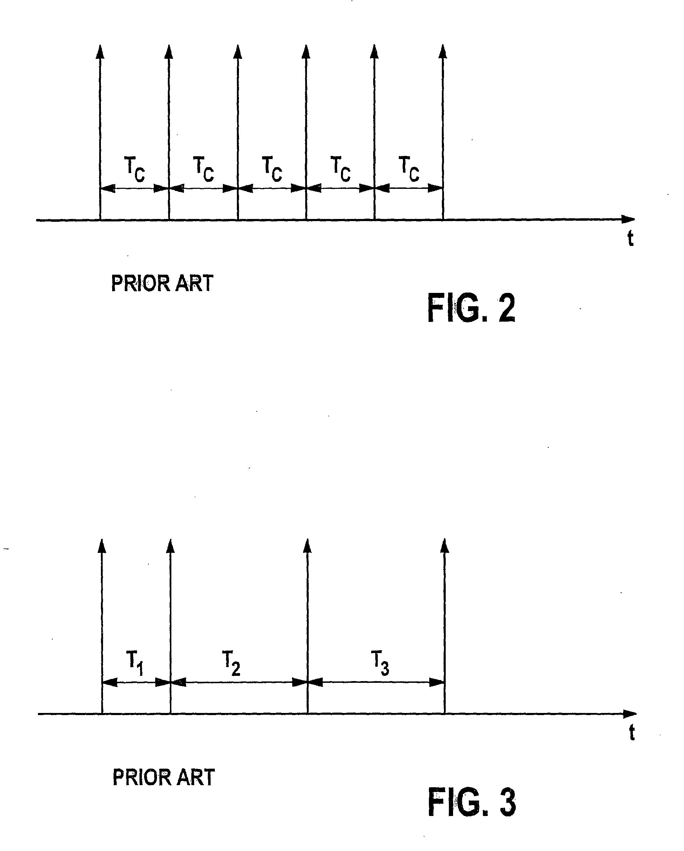

A known rake receiver used a fixed number of rake fingers, each rake finger being separated by a constant interval of T_{C} seconds, where T_{C} equaled the chip interval. This finger allocation method is known to work well for low bandwidths in some radio propagation environments for a simple link. See Figure 2. Referring to Figure 2, a schematic shows prior art rake receiver behavior when the rake finger allocation method uses a fixed number of rake fingers being separated by a constant interval of T_{C}.

Another known rake receiver method was more adaptive in mobile communications environments. This method searches for each individual multi-path component and then allocates a rake finger having a tracking mechanism to each individual multi-path component. See Figure 3. See also Glisic et al., Spread Spectrum CDMA Systems for Wireless Communications, Artech House Publishers, 1997.

Referring to Figure 3, a schematic shows prior art rake receiver behavior when the rake finger allocation method involves a search for each individual multi-path component. This search for the multi-path component may cause a variation in the time intervals [T₁, T₂, T₃] between the rake fingers. That is, [T₁], [T₂], and [T₃] may indeed not equal each other. In this case, each individual multi-path component is allocated a rake finger having a tracking mechanism. This finger allocation method is known to work well with mobile communication and relatively low chip rates, e.g., on the order of 1 Mcps.

However, the known rake receiver methods and devices do not promote a finger allocation scheme that works well for mobile communication systems with high chip rates. The known methods, in particular the first known method described above, requires a high number of rake fingers in order to capture all of the power from a time dispersive channel or from a soft handover system in a mobile communication environment. That is, the chip rate of third generation mobile communication systems, such as Universal Mobile Telephone System (UMTS), is so high that oftentimes more than one rake finger is necessary to capture the energy from one multi-path component on a radio channel. Such an increase of possibly double or more rake fingers necessary to capture the energy provides an unwanted high cost associated with the multiple number of tracking devices as well as the power and search times for detecting new multi-path components.

### Summary and Advantages of the Invention

The present invention provides a method and a device implementing optimal rake finger allocation, particularly for use in third generation mobile communication systems. The third generation mobile communication systems include Wideband Code Division Multiple Access (WCDMA) mobile communication systems.

The present invention also provides a method for rake finger allocation for a rake receiver, characterized in that a received channel impulse response is split into at least one bin; and a plurality of rake fingers and a tracking, or searching, mechanism is assigned to each of the at least one bin. The present invention provides that the tracking mechanism can serve as at least one rake finger as well. The present invention further provides that the method may be used in a Wideband Code Division Multiple Access mobile communication receiver system.

The present invention also provides a method for rake finger allocation for a rake receiver, characterized in that a received channel impulse response is split into a first bin and a second bin; a first plurality of rake fingers is assigned to the first bin; a first tracking mechanism is assigned to the first bin; a second plurality of rake fingers is assigned to the second bin; and a second tracking mechanism is assigned to the second bin, where both the first and the second tracking mechanisms can also serve as rake fingers.

The present invention also provides a mobile station for a cellular mobile communications network, the mobile station including a rake receiver having a plurality of rake fingers, the mobile station operating in a Code Division Multiple Access system, characterized in that the plurality of rake fingers are allocated to a code phase or impulse or signal. Further, a tracking mechanism having an early tracking finger and a late tracking finger is allocated to the code phase and the rake finger. According to the present invention, the early and late tracking fingers can serve as rake fingers and as tracking fingers.

The present invention provides that the accuracy of the rake finger demodulation power is increased and that bit error probability is decreased due to the use of the tracking mechanism or tracking finger for use also as a rake finger.

The present invention provides an increased demodulation range because the tracking mechanism or finger can also be used as a rake finger, thus increasing the time span covered by a rake finger and its accompanying tracking fingers. A rake finger according to the present invention can cover a time span of about T_{c} where T_{c} is the chip period. A rake finger and its accompanying tracking fingers according to the present invention may be able to cover a time span of about 2T_{c} or more.

The present invention provides that the overhead expense of tracking mechanisms is decreased because each rake finger or rake finger group is increased in the number of rake fingers because any tracking mechanisms assigned to the rake finger group may also serve as a rake finger.

The present invention also provides an increased probability of finding multi-path components from a radio channel. This increased probability of finding multi-path components can effectuate an increase in demodulated power and thereby an increase in performance.

Further advantages of the present invention will become apparent from the claims and the description below, based on the drawings, in which:

### Drawings

Figure 1a is a schematic diagram showing a rake receiver according to the present invention;
Figure 1b is a standard early-late gate tracker according to Figure 1a;
Figure 2 is a schematic diagram showing rake receiver behavior for a prior art rake receiver having a fixed number of rake fingers, each rake finger being separated by a constant interval of T_{C} seconds, where T_{C} equaled the chip interval;
Figure 3 is a schematic diagram showing rake receiver behavior for a prior art rake receiver having a method in which a rake finger having a tracking mechanism is allocated to an individual multi-path component;
Figure 4 is a schematic diagram showing rake receiver behavior for a device or method having grouped rake finger assignment according to an embodiment of the present invention;
Figure 5 is a schematic diagram of a mobile station according to the present invention; and
Figure 6 is a schematic diagram showing rake receiver behavior for a device or method according to an embodiment of the present invention.

### Description

The present invention will now be described with particular reference to exemplary embodiments in the context of a Universal Mobile Telephone System/Frequency Division Duplex (UMTS/FDD) mobile terminal operating in a Third Generation Partnership Project (3GPP) mobile communications system.

A UMTS/FDD mobile terminal receives, decodes, codes and sends messages in a Code Division Multiple Access (CDMA) environment. Reception in a UMTS mobile terminal can be performed using a rake receiver having multiple fingers which may be allocated in groups to receive disparate signals simultaneously. According to the present invention, the fingers can be allocated in groups and assigned a tracking mechanism or one early and one late tracking finger for finding multi-path components from the transmitting source of a radio signal and for use as a rake finger.

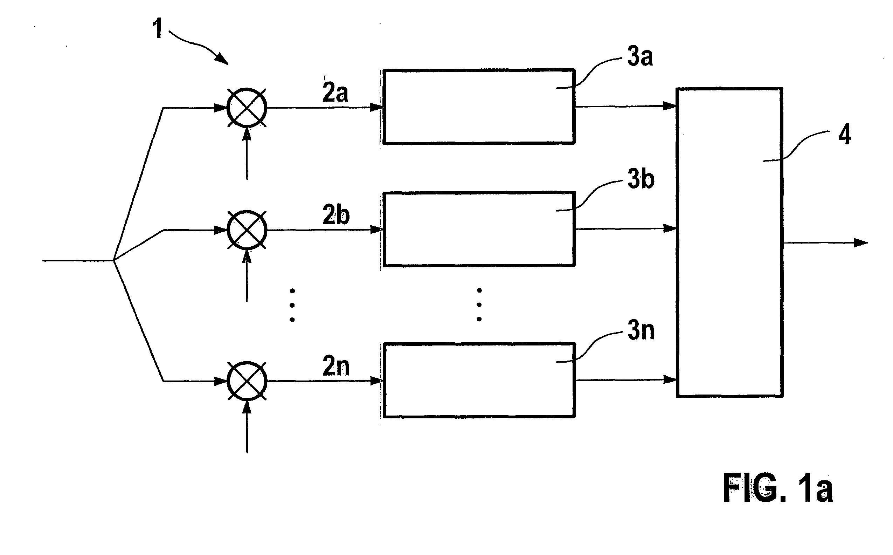

Referring to Figure 1a, a rake receiver consists of a bank of correlators [1]. Each correlator of the bank of correlators can be used to detect a separate multi-path component [2a, 2b...2n]. The correlators tend to detect the stronger multi-path components before the weaker multi-path components. The multi-path components each move through a respective integrator [3a, 3b,...3n]. From the integrators [3a, 3b, ...3n] the components are combined into one signal by a combiner [4] before detection.

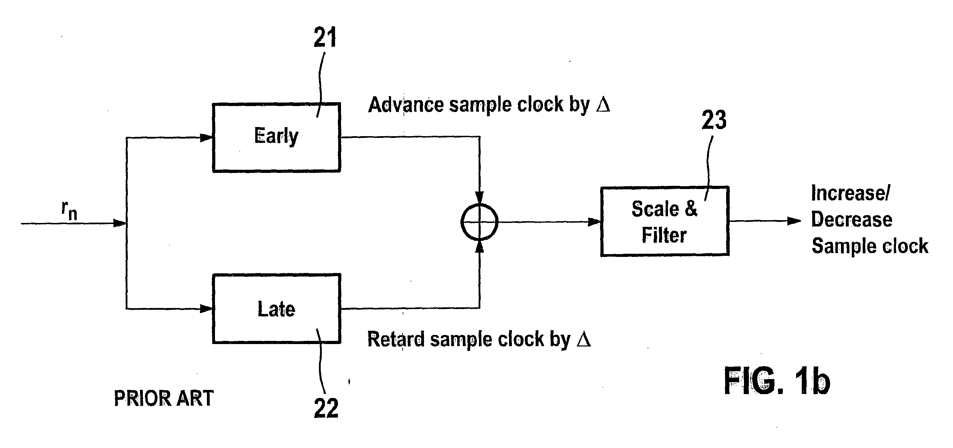

Referring to Figure 1b, in the finger allocation mechanism according to Figure 1a, a tracking mechanism is a standard early-late gate tracker where a signal is processed through either an advance sample clock [21] or a retard sample clock [22] and then through a scale and filter [23]. The output is then categorized as an increase or a decrease of a sample clock.

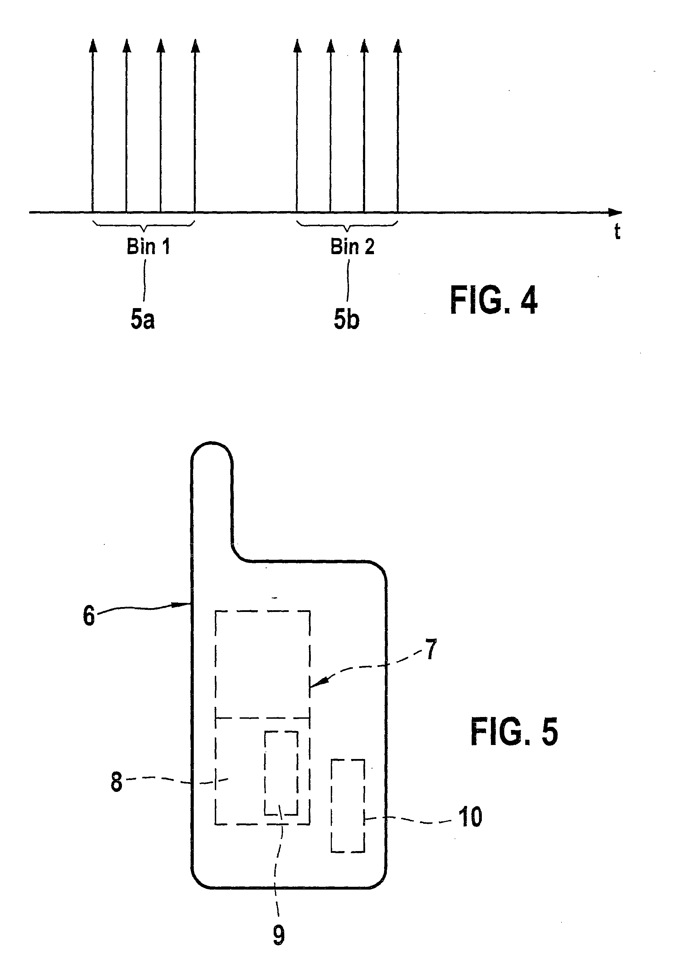

Referring to Figure 4, a schematic shows rake receiver behavior according to the present invention where the rake fingers are grouped in Bin 1 [5a] and Bin 2 [5b]. According to the present invention, particularly for WCDMA mobile communication receivers, the present device or method can include dividing any received channel impulse responses into one or more bins, e.g., Bin 1 [5a] and Bin 2 [5b]. Each bin can then be assigned a set of rake fingers and one or more tracking mechanisms. The one or more tracking mechanisms should be capable of searching for signals, i.e., multi-path components and should be capable of serving as a rake finger. Each tracking mechanism has two tracking fingers, an early tracking finger and a later tracking finger.

Referring to Figure 5, a UMTS mobile station [6] includes a processor [10] and a rake receiver [8] having a plurality of rake fingers [9]. Rake receiver [8] is a part of receiver system [7]. Where mobile station [6] is a multi-mode terminal having a receiver system capable of tuning between signals of two different systems, receiver system [7] may include one or more other receivers or receiver subsystems (not shown). Mobile station [6] may be a multi-mode mobile station, capable of operating, for example, in a Global System for Mobile Telecommunications (GSM) system as well as a UMTS system.

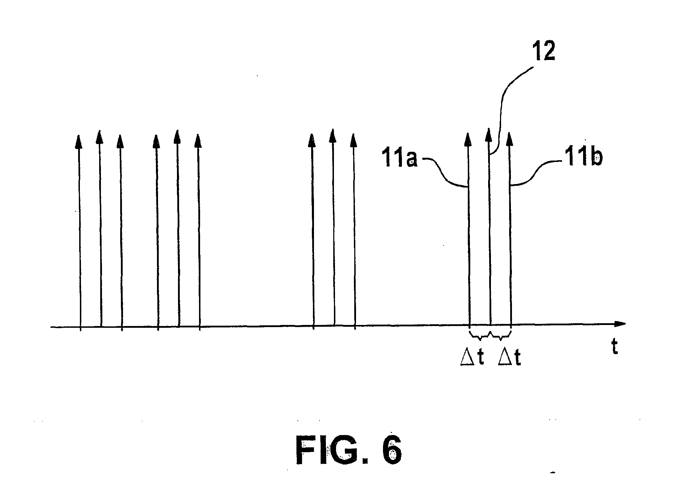

Referring to Figures 1a, 1b, 4 and 5, when a CDMA mobile station [6] is allocated to a base station, the CDMA mobile station [6] will look for groups of multi-path components [2a, 2b;...2n] identified by a transmitted signature sequence. For each group of multi-path components, a group of rake fingers will be assigned as, e.g., Bin 1 [5a] and Bin 2 [5b]. Each of the rake finger groups [5a, 5b] will have one or more tracking mechanisms which can also serve as rake fingers. The tracking mechanisms can be used to follow multi-path components from the radio channel and can be used as a rake finger for demodulation purposes. See Figure 1b. Each tracking mechanism, as earlier discussed, may include two tracking fingers, that is an early tracking finger [11a] and a late tracking finger [11b]. See Fig. 6. The tracking mechanism may have more than one early tracking finger [1 la] and more than one late tracking finger [11b] as well.

Referring to Figure 6, the behavior of the rake receiver according to the present invention is shown. A tracking mechanism [11a, 11b] or a plurality of tracking mechanisms or a plurality of tracking fingers [11a, 11b], can be allocated to a rake finger [12]. The early tracking finger [11a] is spaced by Δt from the rake finger [12]. Likewise, the late tracking finger [11b] is spaced by Δt from the rake finger [12]. According to the present invention, both tracking fingers shown [11a, 11b] can also serve as rake fingers and thus increase the accuracy and range of the rake finger demodulation effort.

Preferably, a receiver system control software in the mobile station is programmed to operate the receiver subsystem, e.g., to allocate and/or control the rake fingers, for performing the monitoring according to the present invention. Such programming modifications are preferably executed by processor [10] in mobile station [6] for executing radio resource management functions, or by another appropriate processor. The method or mobile station may be implemented via software using a microprocessor (µP) or a digital signal processor (DSP). Further, the present invention also provides that the software may control a search of hardware, the hardware including a controller, an integrator and a combiner. See Fig. 5. As such programming modifications would be well-understood by one of skill the art, they are not further described herein. It should be noted that embodiments are also possible in which hardware changes replace the software changes.

In all the embodiments of the present invention described herein, as well as other embodiments of the present invention, the method or mobile station device may be used in an European Telecommunications Standard Institute (ETSI) or Universal Mobile Telecommunications System (UMTS), an Association of Radio Industries and Businesses (ARIB) Wideband Code Division Multiple Access (WCDMA) system, or a Wideband Code Division Multiple Access (WCDMA) system being defined by 3^{rd} Generation Partnership Project (3GPP) system.

Various embodiments within the scope of the present invention are possible. For example, the present invention may be applied to various frequency bands. Additionally, the present invention may be applied for monitoring in other types of mobile communication systems than those described herein. Also, embodiments described herein may be applied in a variety of combinations for allocating rake finger groups and their detection of multi-path components. These and other variations are intended to be part of the present invention.

## Claims

1. A method for allocating a rake finger [12] and a tracking mechanism [11a, 11b], **characterized in that**
a code phase of a signal is detected by a rake receiver;
a rake finger [12] and a tracking mechanism [11a, 11b] are allocated to the detected code phase, the tracking mechanism [11a, 11b] also serving as additional rake fingers [12].

2. The method of claim 1, **characterized in that**
the tracking mechanism [11a, 11b] provides an early tracking finger [11a] and a late tracking finger [11b], the early tracking finger [11a] functions as both the early tracking finger and an early rake finger, the late tracking finger [11b] functions as both the late tracking finger and a late rake finger.

3. A method for rake finger [12] and tracking mechanism [11a, 11b], **characterized in that**
a code phase of a signal is detected by a rake receiver;
the rake receiver allocates at least one tracking mechanism [11a, 11b] to the code phase, the at least one tracking mechanism [11a, 11b] providing an early tracking finger [11a] which serves also as a first rake finger and the at least one tracking mechanism [11a, 11b] providing a late tracking finger [11b] which serves also as a second rake finger.

4. The method of according to any of the preceding claims, **characterized in that**
the rake receiver allocates a plurality of the rake fingers to the code phase.

5. A method for rake finger allocation for a rake receiver, **characterized in that**
a) a required channel impulse response is split into a first bin [5a] and a second bin [5b];
b) a first plurality of rake fingers [12] is assigned to the first bin [5a];
c) a first tracking mechanism is assigned to the first bin [5a], the first tracking mechanism having a first early tracking finger and a first late tracking finger, the first early tracking finger also serves as a first additional rake finger, the first late tracking finger also serves as a second additional rake finger;
d) a second plurality of rake fingers [12] is assigned to the second bin [5b]; and
e) a second tracking mechanism is assigned to the second bin [5b], the second tracking mechanism having a second early tracking finger and a second late tracking finger, the second early tracking finger also serves as a third additional rake finger, the second late tracking finger also serves as a fourth additional rake finger.

6. The method according to any of the preceding claims, **characterized in that**
each rake finger [12] covers a minimum time span of about Tc, where Tc is an integrated chip period, preferably greater than about 2Tc.

7. The method according to any of the preceding claims, **characterized in that**
the rake receiver is part of a Wideband Code Division Multiple Access mobile communication receiver system.

8. The method according to any of the preceding claims, **characterized in that**
the method can be checked for accuracy using simulations of a 3^{rd} generation Wideband CDMA mobile system such as European Telecommunications Standard Institute (ETSI) (Universal Mobile Telecommunications System (UMTS)), Association of Radio Industries and Businesses (ARIB), or Wideband Code Division Multiple Access (W-CDMA) system.

9. The method according to any of the preceding claims, **characterized in that**
each rake finger [12] and each tracking mechanism [11a, 11b] are assigned so as to increase demodulation power.

10. The method according to any of the preceding claims, **characterized in that**
the received channel impulse response is split in accordance with similar relative delays, amplitudes and phases of the received channel impulse response.

11. The method according to any of the preceding claims, **characterized in that**
the method is implemented via software, so that the software controls each rake finger [12] and each tracking mechanism [11a, 11b] and the software controls a search of hardware, where the hardware includes a controller, an integrator and a combiner, and the software is implemented using a microprocessor or a digital signal processor.

12. A mobile station for a cellular mobile communications network, the mobile station including a rake receiver having a first at least one rake finger [12] and at least one tracking mechanism [11a, 11b], the mobile station operating in a Code Division Multiple Access system, **characterized in that**
a code phase, the code phase being received by the rake receiver and being associated with the first at least one rake finger [12] and the at least one tracking mechanism [11a, 11b], the at least one tracking mechanism [11a, 11b] having an at least one early tracking finger [11a] and an at least one late tracking finger [11b] so that the at least one early tracking finger [11a] also serves as a second at least one rake finger and the at least one late tracking finger [11b] also serves as a third at least one rake finger.

13. A baseband receiver apparatus, **characterized in that**
the baseband receiver contains hardware which is capable of implementing the method according to claims 1, 2, 3, 4, 5, 6, 7, 8, 9, 10, or 11.
